# EUROPEAN PATENT APPLICATION

(11) **EP 2 156 770 A1**
(43) Date of publication of application: **24.02.2010**
(21) Application number: 08162793.7
(22) Date of filing: 22.08.2008
(51) Int. Cl.: A47J 31/42, A47J 31/44

(54) **Coffee beverage making device comprising means for cooling coffee beans**

(71) Applicant: Koninklijke Philips Electronics N.V., 5621 BA Eindhoven (NL)
(72) Inventor: The designation of the inventor has not yet been filed
(74) Representative: Damen, Daniel Martijn

(57) **Abstract**

A device (1) for making a coffee beverage comprises means (10) having a space (11) for storing coffee beans, means (20) for grinding coffee beans, a brewing unit (70) for receiving and holding a quantity of ground coffee beans, means (60) for supplying an extracting medium such as water or steam to the brewing unit (70), and means (80) for discharging the coffee beverage to be made in the brewing unit (70). Furthermore, the device (1) comprises means (12) for cooling the coffee beans to be ground in the device (1), which means are arranged in the storage means (10). Advantageously, when the cooling means (12) which are applied comprise a cold side (12a) and a warm side (12b), the warm side (12b) is positioned such as to heat cups (90) to be used for receiving the coffee beverage from the device (1).

## Description

### FIELD OF THE INVENTION

The present invention relates to a device for performing a process in which ground coffee beans are used for making a coffee beverage, comprising means having a space for storing coffee beans, means for grinding coffee beans, a brewing unit for receiving and holding a quantity of ground coffee beans, means for supplying an extracting medium such as water or steam to the brewing unit, and means for discharging the coffee beverage to be made in the brewing unit on the basis of interaction of the extracting medium with the ground coffee beans from the brewing unit.

### BACKGROUND OF THE INVENTION

A coffee beverage making device as mentioned in the opening paragraph is known. For example, CH 660 288 discloses an automatic espresso machine comprising an electric grinder for grinding coffee beans, a unit for preparing the water to be used in an espresso making process, and a removable filter holder for receiving and holding a quantity of ground coffee beans and for receiving the water. During operation of the espresso machine, the actual espresso making process takes places in the filter holder, and the obtained espresso is discharged from the filter holder through a suitable outlet thereof.

In general, automatic espresso machines are very user friendly. In most cases, such machines comprise a container for accommodating a quantity of coffee beans. When the espresso machine is operated, a suitable quantity of coffee beans is automatically transported from the container to the grinder, and the grinder is activated to perform its grinding function on the coffee beans, so that a quantity of freshly ground coffee beans is obtained, which is suitable to be used in the process of making espresso. To this end, the quantity of ground coffee beans is transported from the grinder to the brewing unit. In some cases, for example, in the machine disclosed in CH 660 288, a portion of the brewing unit is removably arranged, so that it is possible for a user to easily remove the quantity of ground coffee beans from the espresso machine after use. However, it is also possible that the machine is adapted to automatically transport a used quantity of ground coffee beans from the brewing unit to a waste container.

It is commonly known that the quality of coffee beans decreases over time. For example, an automatic espresso machine is suitable for containing 250 grams of coffee beans, which is a quantity for 30 to 50 cups. Depending on the frequency of use of the machine, this may result in a longest remaining quantity of the coffee beans staying inside the machine for more than one month, wherein the taste of the espresso to be made by operating the machine decreases notably over time.

### SUMMARY OF THE INVENTION

It is an object of the present invention to provide a coffee beverage making device in which the taste of the coffee beans is preserved as long as possible. This object is achieved by a device comprising means for cooling the coffee beans to be ground in the device, which means are arranged in the storage means, for cooling the coffee beans at the location of the storage means.

It is noted that US 5 267 507 discloses a coffee maker comprising means for cooling the coffee beans to be ground by a grinder of the coffee maker. However, these cooling means are arranged between a roaster and the grinder, and serve particularly for reducing the relatively high temperature of freshly roasted coffee beans. In the device according to the present invention, the cooling means are arranged in the storage means, for cooling the coffee beans at the location of the storage means. In this way, a function of actually preserving the coffee beans is realized, rather than just cooling down the coffee beans after having been roasted.

Preferably, the cooling means are adapted to keep the temperature prevailing in the storage means below 0°C during operation. In this way, the coffee beans which are present inside the storage means may actually be kept in a frozen state, and may be supplied to the grinding means in a frozen state. In any case, when the coffee beans are kept at a relatively low temperature, i.e. a temperature which is lower than room temperature, the taste of the coffee beans is preserved longer, and the coffee beans are less oily, so that cleaning of the grinding means is facilitated. Furthermore, when the coffee beans are ground in a frozen state, the grinding is significantly improved, because frozen coffee beans are much more brittle than coffee beans at room temperature.

The device according to the present invention may further comprise means for supporting at least one cup to be used as a receptacle for the coffee beverage. Furthermore, in many practical cases, the cooling means may comprise a unit having a warm side, i.e. a side where warmth is expelled from the unit during operation of the unit. For example, the cooling means may comprise a conventional heat exchanger having a side where a temperature lower than ambient temperature is prevailing and a side where a temperature higher than ambient temperature is prevailing during operation. According to an advantageous option existing within the scope of the present invention, the cooling unit having the warm side is arranged such that the warm side is in the vicinity of the cup supporting means and may be used for heating up the cup supporting means and any cup(s) supported by these means. In this way, the increased power consumption which is a result of the addition of the cooling means may be reduced, as there is no need for separate means for supplying heat to the cup supporting means, which would otherwise be present in the coffee beverage making device.

The above-described and other aspects of the present invention will be apparent from and elucidated with reference to the following description of an automatic espresso machine according to the present invention.

### BRIEF DESCRIPTION OF THE DRAWINGS

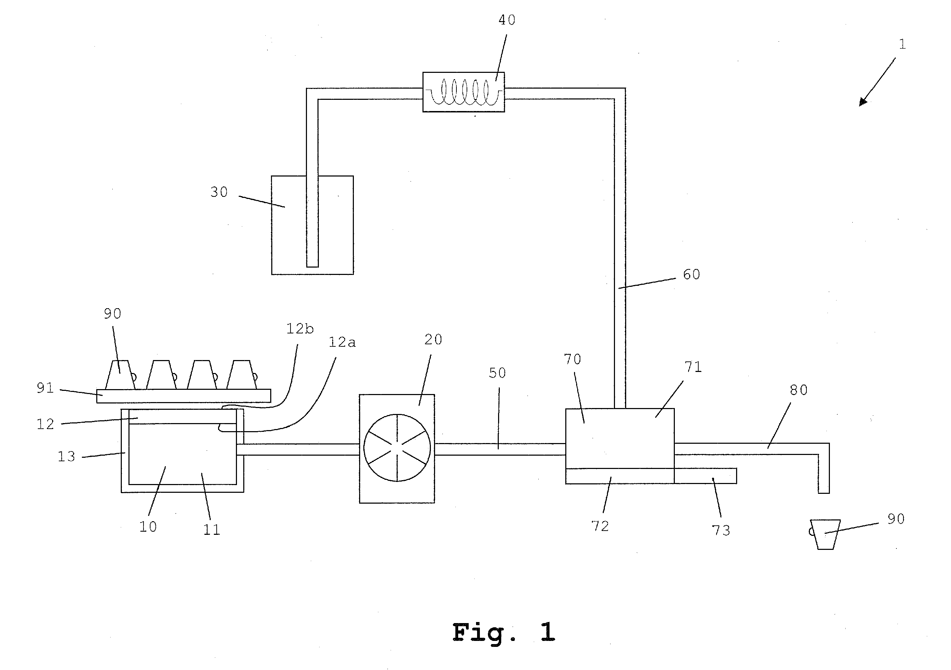

The present invention will now be explained in greater detail with reference to figure 1, which diagrammatically shows components of an automatic espresso machine according to the present invention and a number of cups to be used for receiving espresso from the espresso machine.

### DETAILED DESCRIPTION OF EMBODIMENTS

Figure 1 shows components of an automatic espresso machine 1 according to the present invention.

The functioning of an automatic espresso machine is well-known. In general, the espresso machine 1 is adapted to make espresso on the basis of coffee beans and hot water. As a first step in an espresso making process, the coffee beans are ground. Subsequently, the hot water is supplied to a quantity of ground coffee beans, and is forced to flow through this quantity, wherein the espresso is obtained on the basis of an extracting action performed on the ground coffee beans by the hot water. Figure 1 diagrammatically shows a container 10 having a space 11 for storing coffee beans, a grinder 20 for grinding coffee beans to be taken from the container 10, a water tank 30 for containing water, and heating means 40 for heating water to be drawn from the water tank 30. Both a duct 50 for conveying ground coffee beans, which is connected to the grinder 20, and a duct 60 for conveying hot water, which is connected to the heating means 40, are connected to a brewing unit 70, in which the espresso is actually made during operation of the espresso machine 1. In the espresso making process, a suitable quantity of ground coffee beans is retained inside the brewing unit 70, and a suitable quantity of hot water is supplied to the brewing unit 70, and is forced to flow through the ground coffee beans.

For the purpose of emitting hot espresso, the espresso machine 1 comprises an outlet duct 80, which is extending from the brewing unit 70. Figure 1 shows a cup 90 which serves for receiving the espresso from the espresso machine 1, and which is located at a free end of the outlet duct 80. Furthermore, it is noted that in the shown example, the brewing unit 70 comprises a fixedly portion 71 and a removably arranged portion 72, wherein the removably arranged portion 72 is at a bottom side of the brewing unit 70, and may be taken out for any suitable reason such as disposing of a quantity of ground coffee beans after use. In order to facilitate handling of the removably arranged portion 72 of the brewing unit 70, the removably arranged portion 72 is provided with a handle 73 or the like, which is suitable to be taken hold of by a user.

An important advantage of the automatic espresso machine 1 is that in case a user desires to have an espresso, there is nothing more that needs to be done than activating the espresso machine 1 by pushing a button (not shown) or taking comparable action, provided that the container 10 contains an appropriate quantity of coffee beans, and the water tank 30 is filled with water to a sufficient extent. Once the espresso machine 1 is activated, an appropriate quantity of coffee beans is taken from the container 10 and supplied to the grinder 20, wherein the grinder 20 is operated to grind the coffee beans. The quantity of ground coffee beans delivered by the grinder 20 is transported to the brewing unit 70 through the duct 50 extending between the grinder 20 and the brewing unit 70. Furthermore, water is drawn from the water tank 30, heated by the heating means 40, and supplied to the brewing unit 70 through the duct 60 extending between the heating means 40 and the brewing unit 70. In the brewing unit 70, the hot water is forced to flow through the quantity of ground coffee beans which is accommodated there, and the thus obtained espresso flows from the brewing unit 70 to the cup 90 through the outlet duct 80. It is noted that, for the purpose of controlling the espresso making process, the espresso machine 1 may comprise any suitable controlling means (not shown).

The present invention relates to features of the container 10 for containing the coffee beans. In particular, cooling means 12 are arranged in the container 10, and walls 13 of the container 10 are isolated. Preferably, the cooling means 12 are adapted to keep the temperature that is prevailing inside the container 10 at a level below 0°C, so that the coffee beans which are present inside the container 10 are kept in a frozen state. In any case, storage of coffee beans at a relatively low temperature is advantageous as far as preservation of the coffee beans is concerned, wherein loss of taste of the coffee beans is minimized. Furthermore, grinding coffee beans in a frozen state is easier than grinding coffee beans which are at room temperature, and the grinder 20 remains cleaner.

It is advantageous if measures are taken for ensuring that the cooled coffee beans are enclosed well inside the container 10, as any leak in the cooled container would lead to condensation of water.

The cooling means 12 may be of any suitable type. For example, the cooling means 12 may comprise a heat exchanger having a cold side 12a and a warm side 12b, wherein the cold side 12a is directed towards the inside of the container 10, and the warm side 12b is directed towards the outside of the container 10. Within the scope of the present invention, the warm side of the cooling means 11 may be used for performing a heating process such as a process for heating cups 90 to be used for receiving the espresso. Normally, for performing such a process, separate means for generating and supplying the necessary heat would be applied. However, when the cooling means 12 according to the present invention are present, such separate heating means may be omitted, and the total extra power needed for the cooling is reduced as a result. For sake of completeness, it is noted that the application of hot cups 90 for receiving the espresso is preferred, as such an application allows for avoiding a large decrease of temperature of the espresso when it is being received in a cup 90, and keeping the espresso at an appropriate temperature at a relatively long time.

In particular, the espresso machine 1 may comprise a cup support 91 which is adapted to support a number of cups 90. It is very advantageous if the cup support 91 is arranged right above the warm side of the cooling means 12, so that the warmth which is expelled from the cooling means 12 may be supplied directly to the cup support 91, and heat losses may be minimized. Preferably, the cup support 91 is made of a material that is very well capable of conducting heat, such as metal.

It will be clear to a person skilled in the art that the scope of the present invention is not limited to the examples discussed in the foregoing, but that several amendments and modifications thereof are possible without deviating from the scope of the present invention as defined in the attached claims. While the present invention has been illustrated and described in detail in figure 1 and the description, such illustration and description are to be considered illustrative or exemplary only, and not restrictive. The present invention is not limited to the disclosed embodiments.

For example, in the embodiment of the device 1 according to the present invention as described in the foregoing on the basis of figure 1, the heating means 40 are separately arranged with respect to the water tank 30. That does not alter the fact that the heating means 40 may also be arranged inside the water tank 30. Furthermore, instead of having a water tank 30, the device 1 may also have another type of supply of water, and may be connected to a tap for cold water supply or hot water supply.

For sake of completeness, it is noted that not all components of an automatic espresso machine are shown in figure 1 and described in the foregoing. For example, a suitable pump may be applied for pumping the water through the device 1, and a suitable housing may be applied for accommodating most of the other components of the device 1. Although the examples as described are in the field of devices for making espresso, it should be understood that the present invention is applicable in the field of devices for making other types of coffee beverages, provided that these devices comprise means for storing coffee beans to be ground.

Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the present invention.

In the foregoing, a device 1 for performing a process in which ground coffee beans are used for making a coffee beverage has been described. The device 1 comprises means 10 having a space 11 for storing coffee beans, means 20 for grinding coffee beans, a brewing unit 70 for receiving and holding a quantity of ground coffee beans, means 60 for supplying an extracting medium such as water or steam to the brewing unit 70, and means 80 for discharging the coffee beverage to be made in the brewing unit 70 on the basis of interaction of the extracting medium with the ground coffee beans from the brewing unit 70. Furthermore, the device 1 comprises means 12 for cooling the coffee beans to be ground in the device 1, which means 12 are arranged in the storage means 10.

The device 1 may also comprise means 91 for supporting at least one cup 90 to be used as a receptacle for the coffee beverage, and the cooling means 12 which are applied may comprise a cold side 12a and a warm side 12b. Advantageously, in such a case, the cold side 12a is positioned such as to cool the inside of the storage means 10, and the warm side 12b is positioned such as to heat the cup supporting means 91 and any cup(s) 90 supported by these means 91.

## Claims

1. Device (1) for performing a process in which ground coffee beans are used for making a coffee beverage, comprising means (10) having a space (11) for storing coffee beans, means (20) for grinding coffee beans, a brewing unit (70) for receiving and holding a quantity of ground coffee beans, means (60) for supplying an extracting medium such as water or steam to the brewing unit (70), means (80) for discharging the coffee beverage to be made in the brewing unit (70) on the basis of interaction of the extracting medium with the ground coffee beans from the brewing unit (70), and means (12) for cooling the coffee beans to be ground in the device (1), which means (12) are arranged in the storage means (10), for cooling the coffee beans at the location of the storage means (10).

2. Device (1) according to claim 1, wherein the cooling means (12) are adapted to keep the temperature prevailing in the storage means (10) below 0°C during operation.

3. Device (1) according to claim 1 or 2, further comprising means (91) for supporting at least one cup (90) to be used as a receptacle for the coffee beverage, wherein the cooling means comprise a unit (12) having a warm side (12b), i.e. a side where warmth is expelled from the unit (12) during operation of the unit (12), and wherein the warm side (12b) of the unit (12) is arranged in the vicinity of the cup supporting means (91).

4. Device (1) according to claim 1, wherein at least a portion (72) of the brewing unit (70) is removably arranged.
